# EUROPÄISCHE PATENTSCHRIFT

(11) **EP 1 748 856 B1**
(45) Veröffentlichungstag und Bekanntmachung des Hinweises auf die Patenterteilung: **23.04.2008**
(21) Anmeldenummer: 05742885.6
(22) Anmeldetag: 21.05.2005
(51) Int. Cl.: B21D 53/84, F01L 1/047, F16H 53/02

(54) **NOCKENWELLE UND EIN VERFAHREN ZU DEREN HERSTELLUNG**
CAMSHAFT AND METHOD FOR THE PRODUCTION THEREOF
ARBRE A CAMES ET PROCEDE DE FABRICATION

(30) Priorität: 25.05.2004 DE 102004025553
(43) Veröffentlichungstag der Anmeldung: 07.02.2007
(73) Patentinhaber: Daimler AG, 70327 Stuttgart (DE)
(72) Erfinder: HEUBERGER, Axel, 72218 Wildberg (DE); IZQUIERDO, Patrick, 89075 Ulm (DE); PELLKOFFER, Wolfgang, 91567 Herrieden (DE); PFEFFINGER, Harald, 75233 Tiefenbronn (DE); SASS, Heiko, 71732 Tamm (DE)
(86) Internationale Anmeldenummer: PCT/EP2005/005529
(87) Internationale Veröffentlichungsnummer: WO 2005/115658

(56) Entgegenhaltungen:
- DE-A1- 3 342 316
- DE-A1- 10 244 151
- DE-A1- 19 617 219
- DE-A1- 19 909 184
- DE-A1- 19 932 810
- DE-C1- 19 907 258
- DE-U1- 20 121 375
- DE-U1- 29 519 523
- GB-A- 2 187 405

## Beschreibung

Die Erfindung betrifft eine Nockenwelle gemäß dem Oberbegriff des Patentanspruches 1 und ein Verfahren zu deren Herstellung gemäß dem Oberbegriff des Patentanspruches 4.

Eine Nockenwelle der gattungsgemäßen Bauart bzw. ein gattungsgemäße Verfahren zu deren Herstellung ist aus der DE 195 45 991 A1 bekannt. Darin wird eine Nockenwelle vorgestellt, die zur Erzielung einer Leichtbauweise aus einem Rohrrohling hergestellt wird, der aus einer hochfesten Aluminiumlegierung besteht. Aus diesem Rohrrohling wird mittels eines fluidischen Innenhochdruckes an den geeigneten Stellen eine Nockenform ausgeformt. Aufgrund der Weichheit des Materials wird die Nockenaußenfläche mit einer Hartmetalllegierungsschicht mittels eines Auftragsverfahrens, beispielsweise Pulverauftragsflammspritzen, beschichtet. Abschließend wird der beschichtete Nocken auf Endmaß geschliffen. Eine derartige Nockenwelle ist jedoch in keinster Weise betriebstauglich, da das Aluminiumrohr nur geringe Torsionsbeständigkeit aufweist und zum anderen die Hartmetalllegierungsschicht durch die harte mechanische Beanspruchung über den mit dem Nocken in Kontakt geratenden Kipphebel oder Tassenstößel zerstört wird. Letzteres gründet sich auf die Kerbwirkung der Carbidteilchen in der duktilen Matrix der Hartmetallschicht, welche bei Stoßbeanspruchung zu Rissbildungen in der Schicht führen. Des weiteren ist der Vorgang, aus dem Aluminiumrohrnocken in sichtbarer Größe auszuformen, nicht prozesssicher, da die Aluminiumlegierung in der Regel eine relativ niedrige Streckgrenze aufweist, so dass bei größeren Aufweitungen das Rohr unweigerlich birst.

Aus der DE 102 44 151 A1 ist eine mittels Innenhochdruckumformen hergestellte Nockenwelle bekannt, deren Nocken an der Lauffläche anschließend mit einer Verschleißschutzschicht durch thermisches Spritzen versehen wird. Auch die DE 295 19 523 U1 zeigt eine Nockenwelle, die mittels Innenhochdrucks ausgeformt ist. Die Gleitlager- und Nockenaußenflächen sind mit einer Hartmetalllegierungsschicht durch Pulverauftragsflammspritzen verschleißsicher beschichtet und anschließend auf Endmaß nachgeschliffen. Weiterhin ist aus der DE 199 07 258 C1 ein Verfahren entnehmbar, bei dem ein Rohr aus einem gut verformbaren Material mittels Innenhochdrucks zu einer Nockenwelle umgeformt wird, wobei sich die Nocken wie auch die Lager ausbilden. Durch Abschmelzen von drahtförmigem Material infolge der Einwirkung von Energie wie mit einem Elektronenstrahl werden die Nockenlaufflächen verschleißfest beschichtet.

Die DE 33 42 316 A1 betrifft eine gegossene Nockenwelle, auf deren Gleitflächen bei den Lagern und Nocken eine tribologisch resistente Schutzschicht aufgespritzt wird.

Aus der GB 2 187 405 A ist das Konzept einer Nockenwelle bekannt, bei dem Tragringe auf ein Stahlrohr aufgeschoben werden, wonach diese durch Innenhochdruckbeaufschlagung des Rohres auf dem Stahlrohr kraft- und formschlüssig befestigt werden.

Die Druckschriften DE 201 21 375 U1, DE 199 09 184 A1 und DE 199 32 810 A1 beziehen sich ebenfalls auf die Herstellung einer Nockenwelle aus einem Stahlrohr und Tragringen, die mittels Innenhochdruck auf dem Stahlrohr befestigt werden. Die Tragringe sind zusätzlich aus einem harten und verschleißfesten Material hergestellt oder randschichtgehärtet.

Schließlich verweist die DE 196 17 219 A1 auf ein Verfahren zur Herstellung einer Nockenwelle, bei der auf ein Rohr aus eines billigen Material zumindest ein weiteres Rohr geschoben wird, das aus einem härt- und/oder vergütbaren Werkstoff besteht, wonach die Rohre mittels Innenhochdruck derart aufgeweitet werden, dass sie die gewünschte Form der Nockenwelle annehmen. Anschließend wird das äußere Rohr zur Erzielung der Verschleißbeständigkeit gehärtet.

Der Erfindung liegt daher die Aufgabe zugrunde, eine gattungsgemäße Nockenwelle dahingehend weiterzubilden, dass trotz Leichtbauweise die Betriebstauglichkeit gewährleistet wird. Des Weiteren soll ein Verfahren zur Herstellung der Nockenwelle aufgezeigt werden.

Die Aufgabe ist hinsichtlich der Nockenwelle durch die Merkmale des Patentanspruchs 1 und hinsichtlich des Verfahrens durch die Merkmale des Patentanspruches 4 gelöst.

Nach vielfältigen Versuchen hat sich gezeigt, dass die Betriebstauglichkeit der Nockenwelle dann gewährleistet ist, wenn das Rohr bzw. der Rohrrohling aus einem Stahlwerkstoff und die Verschleißschutzschicht aus einem schlagunempfindlichen Werkstoff bestehen. Durch die Wahl des Stahlwerkstoffes für den Rohrrohling ist die fertig ausgebildete Nockenwelle gegenüber Torsionsbeanspruchungen im Motorbetrieb in ausreichendem Maße beständig. Da der Werkstoff der Verschleißschutzschicht aufgrund seiner Schlagunempfindlichkeit an die Hauptbeanspruchungsart der Nockenwelle, nämlich der Schlag- oder Stoßbeanspruchung in geeigneter Weise angepasst ist, wird erreicht, dass bei diesen Beanspruchungen keine Schäden in der Schicht auftreten, die zu Abplatzungen von Teilbereiche der Schicht oder gar zur völligen Ablösung der Schicht führen können.

Die Nockenwelle weist zudem zumindest ein aus ihr ausgeformtes Gleitlager auf, das mit einer Gleitschicht beschichtet ist, deren Werkstoff von dem der Verschleißschutzschicht des Nockens verschieden ist. Durch die Ausformung des Gleitlagers aus dem Rohrrohling wird eine genau definierte Anpassung an die Form des motorseitigen Gegenlagers erzielt. Um den Reibungsverschleiß möglichst gering zu halte, ist das Gleitlager mit einer Gleitschicht beschichtet. Diese Gleitschicht weist dabei Eigenschaften auf, die unterschiedlich von denen der Verschleißschutzschicht sind, so dass für die Gleitschicht ein von der Verschleißschutzschicht verschiedenes Material gewählt wird.

Zur Ausformung des oder der Nocken sowie des Gleitlagers aus dem Rohrrohling ist es besonders vorteilhaft, wenn dazu die Technik des Innenhochdruckumformens eingesetzt wird, da hierdurch toleranzfreie Abmessungen der Nockenwellenform und deren Oberfläche geschaffen werden. Hierbei können auch vielfältig gestaltete Nocken und Gleitlager erzeugt werden, da der Rohrrohling aufgrund seines Bestehens aus Stahl unter Innenhochdruck sehr gut umformbar ist, wonach sich ausladendere Nocken- und Gleitlager hochpräzise und prozesssicher darstellen lassen. Andererseits braucht die Welle an den Stellen des Gleitlagers und der Nocken durch die Innenhochdruckumformung nicht sonderlich formgenau hergestellt werden, wenn die Formgenauigkeit anstatt dessen durch die Beschichtungen erzielt wird. Dies hat zur Folge, dass für die Innenhochdruckumformung vereinfachte Steuerungen und vereinfachte Formwerkzeugs eingesetzt werden können, was den umformtechnischen apparativen Aufwand in einfacher Weise verringert.

In einer bevorzugten Weiterbildung der Erfindung nach Anspruch 2 ist der Werkstoff der Verschleißschutzschicht eine Stahllegierung, eine M (= Ni, Co usw.) CrAlY (= Si usw.) - Legierung oder eine Panzerlegierung wie Stellit oder NiCrBSi. Mit der Wahl einer Stahllegierung als Werkstoff für die Verschließschutzschicht wird infolge der Werkstoffähnlichkeit zu dem Stahlwerkstoff des Rohrrohlings eine intermetallische Verbindung zwischen Rohr und Verschleißschutzschicht geschaffen, wodurch die Verschleißschutzschicht eine besonders gute Haftung auf dem Rohr aufweist. M (Ni, Co,....) CrAlY (Si, ....) -Legierungen sowie Panzerlegierungen wie Stellite und NiCrBSi sind besonders verschleißbeständig, hochtemperaturfest und hart sowie gleichzeitig sehr duktil, so dass dem Nocken bzw. der Nockenform eine besonders hohe Beanspruchungsfestigkeit gegeben wird.

In einer weiteren bevorzugten Ausgestaltung der Erfindung nach Anspruch 3 besteht der Werkstoff der Gleitschicht aus Messing oder Bronze. Mit der Wahl dieser Werkstoffe wird der Reibverschleiß an der Nockenwelle optimal reduziert, was die Lebensdauer der Nockenwelle verlängert.

Die Aufbringung der Verschleißschutzschicht wird nach der Erfindung gemäß Anspruch 4 durch ein Lichtbogendrahtspritzverfahren ausgeführt. Dieses Verfahren ist relativ billig und sehr einfach zu handhaben. Zudem entstehen keinerlei Verschmutzungen der Anlage wie bei einem Pulverauftragsflammspritzen und wirkt sich nicht wie letzteres gesundheitsgefährdend aus. Alternativ dazu kann auch ein Lichtbogenhybriddrahtspritzverfahren Eingang finden, bei dem zusätzlich eine Acetylen- oder Methanflamme verwandt wird. Mittels dieses Verfahrens wird in vorteilhafter Weise die Dichte der aufgetragenen Schicht in besonders hohem Ausmaß vergrößert, was die Schlag- und Verschleißfestigkeit dieser Schicht enorm verbessert. Des Weiteren können mit diesem Verfahren hohe Auftragsraten erzielt werden, wodurch die Herstellungszeit der Nockenwelle verringert und dadurch die Effektivität der Herstellung erhöht wird.

Nach der Ausformung des Gleitlagers aus dem Rohling wird die schon oben erwähnte Gleitschicht ebenfalls mittels Lichtbogendrahtspritzen oder Lichtbogenhybriddrahtspritzen aufgebracht.

Die Gleitschicht sowie die Verschleißschutzschicht werden mit Schichtdicken zwischen 50 und 1000 µm auf das Gleitlager bzw. auf den Nocken aufgebracht, wobei mittels des Lichtbogendrahtspritzverfahrens oder des Lichtbogenhybriddrahtspritzverfahrens in vorteilhafter Weise hohe Genauigkeiten in der Schichtdickentoleranz mit etwa +/-10 µm erreicht werden können. Trotz der großen Spannweite der Möglichkeiten hinsichtlich der Einstellung einer speziellen Schichtdicke ist die betriebsfeste Haftung der Schicht am Nockengrundkörper bzw. am Gleitlagergrundkörper garantiert. Der Auftrag der Verschleißschutzsicht und der Gleitschicht kann in verfahrensökonomischer Weise gleichzeitig erfolgen, was den Herstellungsprozess der Nockenwelle beschleunigt.

In einer weiteren vorteilhaften Weiterbildung der Erfindung nach Anspruch 5 erfolgt das Lichtbogendrahtspritzen mittels eines Autogenlichtbogens oder eines Plasmalichtbogens. Beide spezielle Verfahren des Lichtbogendrahtspritzens sind besonders preiswert und erzeugen dichte Schichten, wobei letzteres Verfahren zusätzlich besonders hohe Auftragsraten erbringt. Der Plasmalichtbogen kann in Inertgasatmosphäre zwischen zwei sich selbst verbrauchenden Elektroden oder zwischen einer sich selbst opfernden Anode und dem Substrat, das als feste Kathode ausgelegt wird und hier von der Nockenwelle selbst gebildet wird, brennen.

In einer weiteren besonders bevorzugten Ausgestaltung des erfindungsgemäßen Verfahrens nach Anspruch 6 werden die zu beschichtenden Stellen des Rohres vor dem Beschichtungsvorgang aufgeraut. Hierdurch kann sich das Beschichtungsmaterial beim Beschichtungsvorgang mikroskopisch in der Oberfläche der zu beschichtenden Stellen des Rohres mechanisch verkrallen, was die Haftung der aufgetragenen Schicht am Nocken bzw. am Gleitlager in besonderem Ausmaß steigert.

In einer weiteren besonders bevorzugten Weiterbildung der Erfindung nach Anspruch 7 erfolgt das Aufrauen mittels Hochdruckwasserstrahlen vorzugsweise mit einem Druck oberhalb von 3000 bar. Durch die Einwirkung der Hochdruckwasserstrahlen auf die unbeschichteten Stellen des Rohres werden diese besonders nachhaltig und gleichmäßig aufgeraut, wodurch eine weitere erhebliche Verbesserung der Haftung der Schichten am Nocken bzw. am Gleitlager erreicht wird. Zudem ist das Hochdruckwasserstrahlen ein besonders schnelles und rückstandsfreies Verfahren, was zum einen der Effektivität des Herstellungsprozesses und zum anderen der Haftfähigkeit der Schichten und damit der Betriebstauglichkeit der Nockenwelle zugute kommt.

Nachfolgend ist die Erfindung anhand eines in der Zeichnung dargestellten Ausführungsbeispieles näher erläutert. Dabei zeigt:
- Fig. 1: in einer Querschnittsdarstellung eine erfindungsgemäße Nockenwelle mit ausgeformtem Nocken nach dem Beschichtungsvorgang,
- Fig. 2: in einem seitlichen Längsschnitt eine erfindungsgemäße Nockenwelle mit beschichtetem Gleitlager und beschichteten Nocken.

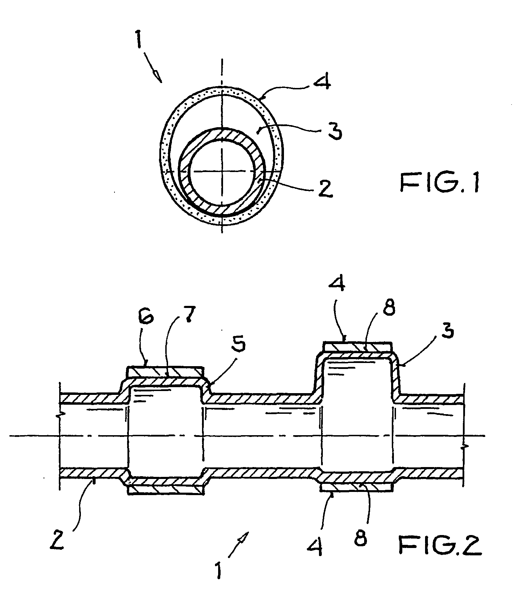

In Fig. 1 ist eine Nockenwelle 1 dargestellt, welche aus einem Rohr 2 besteht, das aus einem Stahlwerkstoff gebildet ist. Aus dem Rohr 2 ist mittels Innenhochdruckumformen ein Nocken 3 ausgeformt. Der Nocken 3 ist mit einer Verschleißschutzschicht 4 beschichtet, die aus einem schlagunempfindlichen Werkstoff, vorzugsweise eine Stahllegierung oder eine Panzerlegierung wie Stellit oder NiCrBSi oder eine MCrAlY-Legierung besteht.

Wie in Fig. 2 zu sehen ist, wird gleichzeitig mit der Ausformung des Nockens 3 mittels Innenhochdruckumformen aus dem Rohr 2 auch noch ein Gleitlagers 5 ausgeformt, das mit einer Gleitschicht 6 beschichtet ist.

Zur Herstellung der Nockenwelle 1 wird wie schon erwähnt ein Gleitlager 5 und ein Nocken 3 mittels Innenhochdruckumformen aus dem Rohr 2 ausgeformt. An den zu beschichtenden Stellen des Rohres 2, nämlich an der Außenfläche 7 des Gleitlagers 5 und an der Lauffläche 8 des Nockens 3 wird dieses aufgeraut. Dies geschieht mittels Hochdruckwasserstrahlen. Hiernach werden die Außenfläche 7 und die Lauffläche 8 mittels eines Lichtbogenhybriddrahtspritzverfahrens unter Bildung der Gleitschicht 6 für das Gleitlager 5 und unter Bildung der Verschleißschutzsicht 4 für den Nocken 3 beschichtet. Die erzeugte Gleitschicht 6 besteht dabei aus Messing oder Bronze, kann jedoch auch aus Molybdänsulfid bestehen. Nach dem Beschichtungsvorgang erfolgt ein abschließender Zerspanungsvorgang zumindest der Verschleißschutzschicht 4, um die Lauffläche 8 des Nockens 3 mit hoher Oberflächengüte darzustellen. Hierzu wird vorzugsweise ein Schleifverfahren eingesetzt. Im Übrigen sei noch angemerkt, dass durch die Innenhochdruckumformung das Stahlrohr 2 bereits so ausgebildet ist, dass der Nocken 3 und das Gleitlager 5 entsprechend der konstruktiv geforderten Form endkonturnah ausgebildet ist.

## Patentansprüche

1. Nockenwelle (1), welche aus einem Rohr (2) besteht, aus dem zumindest ein Nocken (3) aufgeformt ist, wobei der Nocken (3) mit einer Verschleißschutzschicht (4) versehen ist,
**dadurch gekennzeichnet,**
**dass** das Rohr (2) aus einem Stahlwerkstoff und dass die Verschleißsch-utzschicht (4) aus einem schlagunempfindlichen Werkstoff besteht und
**dass** die Nockenwelle (1) zumindest ein aus ihr ausgeformtes Gleitlager (5) aufweist, das mit einer Gleitschicht (6) beschichtet ist, deren Werkstoff von dem der Verschleißschutzschicht (4) des Nockens (3) verschieden ist.

2. Nockenwelle nach Anspruch 1,
**dadurch gekennzeichnet,**
**dass** der Werkstoff der Verschleißschutzschicht (4) eine Stahllegierung, eine M(=Ni,Co,..)CrAlY(=Si,..)-Legierung oder eine Panzerlegierung wie Stellit oder NiCrBSi ist.

3. Nockenwelle nach einem der Ansprüche 1 oder 2,
**dadurch gekennzeichnet,**
**dass** der Werkstoff der Gleitschicht (6) aus Messing oder Bronze besteht.

4. Verfahren zur Herstellung einer Nockenwelle (1), wobei zumindest ein Nocken (3) aus einem rohrförmigen Rohling ausgeformt und anschließend mit einer Verschleißschutzschicht (4) versehen wird,
**dadurch gekennzeichnet,**
**dass** als Rohling ein Rohr (2) aus einem Stahlwerkstoff und als Werkstoff für die Verschleißschutzschicht (4) ein schlagunempfindliches Material verwandt wird,
**dass** die Verschleißschutzschicht (4) mittels eines Lichtbogendrahtspritzverfahrens oder eines Lichtbogenhybriddrahtspritzverfahrens auf dem Nocken (3) aufgebracht wird,
und **dass** aus dem Rohling zusätzlich ein Gleitlager (5) ausgeformt und auf diesem mittels eines Lichtbogendrahtspritzverfahrens oder eines Lichtbogenhybriddrahtspritzverfahrens eine Gleitschicht (6) aus einem von dem Material der Verschleißschutzschicht (4) verschiedenen Werkstoff aufgebracht wird.

5. Verfahren nach Anspruch 4,
**dadurch gekennzeichnet,**
**dass** das Lichtbogendrahtspritzen mittels eines Autogenlichtbogens oder eines Plasmalichtbogens erfolgt.

6. Verfahren nach einem der Ansprüche 4 oder 5,
**dadurch gekennzeichnet,**
**dass** die zu beschichtenden Stellen des Rohres (2) vor dem Beschichtungsvorgang aufgeraut werden.

7. Verfahren nach Anspruch 6,
**dadurch gekennzeichnet,**
**dass** das Aufrauen mittels Hochdruckwasserstrahlen vorzugsweise mit einem Druck oberhalb von 3000 bar erfolgt.

## Claims

1. Camshaft (1) which comprises a tube (2), from which at least one cam (3) is formed, the cam being provided with a wear-resistant layer (4), **characterized in that** the tube (2) consists of a steel material and **in that** the wear-resistant layer (4) consists of an impact-insensitive material and **in that** the camshaft (1) has at least one sliding bearing (5) formed from it, which is coated with an antifriction layer (6), the material of which is different from that of the wear-resistant layer (4) of the cam (3).

2. Camshaft according to Claim 1, **characterized in that** the material of the wear-resistant layer (4) is a steel alloy, an M(=Ni,Co,..)CrAlY(=Si..) alloy or an armour alloy such as stellite or NiCrBSi.

3. Camshaft according to either of Claims 1 and 2, **characterized in that** the material of the antifriction layer (6) consists of brass or bronze.

4. Method for producing a camshaft (1), at least one cam (3) being formed from a tubular blank and subsequently provided with a wear-resistant layer (4), **characterized in that** a tube (2) of a steel material is used as the blank and an impact-insensitive material is used as the material for the wear-resistant layer (4), **in that** the wear-resistant layer (4) is applied to the cam (3) by means of an arc wire spraying process or a hybrid arc wire spraying process, and **in that** a sliding bearing (5) is additionally formed from the blank and an antifriction layer (6) of a material that is different from the material of the wear-resistant layer (4) is applied to the said bearing by means of an arc wire spraying process or a hybrid arc wire spraying process.

5. Method according to Claim 4, **characterized in that** the arc wire spraying is performed by means of an autogenous arc or a plasma arc.

6. Method according to either of Claims 4 and 5, **characterized in that** the locations of the tube (2) that are to be coated are roughened before the coating operation.

7. Method according to Claim 6, **characterized in that** the roughening is performed by means of highpressure water jets, preferably at a pressure above 3000 bar.

## Revendications

1. Arbre à cames (1), qui se compose d'un tube (2) à partir duquel on a formé au moins une came (3), dans lequel la came (3) est garnie d'une couche de protection contre l'usure (4), **caractérisé en ce que** le tube (2) est constitué d'une matière d'acier, **en ce que** la couche de protection contre l'usure (4) se compose d'un matériau insensible aux chocs et **en ce que** l'arbre à cames (1) comporte au moins un palier lisse (5) formé à partir de celui-ci, qui est revêtu d'une couche de glissement (6) dont le matériau est différent du matériau de la couche de protection contre l'usure (4) de la came (3).

2. Arbre à cames selon la revendication 1, **caractérisé en ce que** le matériau de la couche de protection contre l'usure (4) est un alliage d'acier, un alliage M(=Ni,Co,...)CrAlY(=Si,...) ou un alliage de blindage tel que la stellite ou le NiCrBSi.

3. Arbre à cames selon l'une quelconque des revendications 1 ou 2, **caractérisé en ce que** le matériau de la couche de glissement (6) se compose de laiton ou de bronze.

4. Procédé de fabrication d'un arbre à cames (1), dans lequel on forme au moins une came (3) à partir d'une ébauche tubulaire et on la garnit ensuite d'une couche de protection contre l'usure (4), **caractérisé en ce que** l'on utilise comme ébauche un tube (2) en une matière d'acier et comme matériau pour la couche de protection contre l'usure (4) une matière insensible aux chocs, **en ce que** l'on dépose la couche de protection contre l'usure (4) sur la came (3) au moyen d'un procédé de pulvérisation de fil à l'arc électrique ou d'un procédé de pulvérisation de fil hybride à l'arc électrique, et **en ce que** l'on forme en plus à partir du tube (2) un palier lisse (5) et on dépose sur celui-ci, au moyen d'un procédé de pulvérisation de fil à l'arc électrique ou d'un procédé de pulvérisation de fil hybride à l'arc électrique, une couche de glissement (6) en un matériau différent du matériau de la couche de protection contre l'usure (4).

5. Procédé selon la revendication 4, **caractérisé en ce que** l'on exécute le procédé de pulvérisation de fil à l'arc électrique au moyen d'un arc électrique à l'autogène ou d'un arc électrique au plasma.

6. Procédé selon l'une quelconque des revendications 4 ou 5, **caractérisé en ce que** l'on dépolit les zones du tube (2) à revêtir avant l'opération de revêtement.

7. Procédé selon la revendication 6, **caractérisé en ce que** l'on effectue le dépolissage au moyen de jets d'eau à haute pression, de préférence avec une pression supérieure à 3000 bars.
